# EUROPÄISCHE PATENTANMELDUNG

(11) **EP 0 991 226 A1**
(43) Veröffentlichungstag der Anmeldung: **05.04.2000**
(21) Anmeldenummer: 98118505.1
(22) Anmeldetag: 30.09.1998
(51) Int. Cl.: H04L 12/24

(54) **Verfahren für den Zugriff auf Daten in Netzelementen**

(71) Anmelder: SIEMENS AKTIENGESELLSCHAFT, 80333 München (DE)
(72) Erfinder: Dörr, Franz, 3493 Hadersdorf (AT)

(57) **Zusammenfassung**

Ein Verfahren zur Durchführung von Zugriffen auf Daten, welche in Netzelementen (NE1) eines Kommunikationsnetzes in objektorientierter Form als Objektmodelle (LOGn, OB1, OB2 ...) mit einer Baumstruktur vorliegen, und in dem Netz der Datenverkehr betreffend die Netzverwaltung zumindest zum Teil über ein objektorientiertes Protokoll abläuft, wobei bei Einlangen einer Zugriffsanforderung für ein Objekt (LOGn) seitens eines Bedienungssystems (OS1) die Daten einer vorgegebenen Teilmenge von Subobjekten (OB 1 ... OB 100) in ein File (FIL) geschrieben und sodann zusammengefaßt an das Bedienungssystem (OS1) gesandt werden.

## Beschreibung

Die Erfindung bezieht sich auf ein Verfahren zur Durchführung von Zugriffen auf Daten, welche in Netzelementen eines Kommunikationsnetzes in objektorientierter Form als Objektmodelle mit einer Baumstruktur vorliegen, und in dem Netz der Datenverkehr betreffend die Netzverwaltung zumindest zum Teil über ein objektorientiertes Protokoll abläuft.

Kommunikationsnetze bestehen meist nicht nur aus dem eigentlichen Teilnehmernetz für die Netzkanalverbindungen, sondern auch aus einem Signalisierungsnetz und einem Management-Netz. Ein im Rahmen der Erfindung beispielsweise betrachtetes System ist das 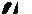 Diensteintegrierende digitale Nachrichtennetz", im folgenden kurz ISDN genannt und ebenso das Breitband-ISDN auf der Basis der ATM (Asynchrounous Transfer Mode) Übertragungstechnik. Für die Wartungs- und Betriebsaufgaben, z. B. das Ändern von Daten in Vermittlungsstellen, die Eröffnung oder Abänderung von neuen Leistungsmerkmalen und die Routinewartung, ist im ISDN-System das Telecommunications Management Network, abgekürzt TMN vorgesehen und in der Empfehlung CCITT-Recommendation M.30, Genf: ITU 1989 niedergelegt. Dabei erfolgt der Zugriff auf Netzelemente, z. B. Vermittlungsstellen, und deren Administration über objektorientierte Schnittstellen, insbesondere über die sogenannten Q3-Schnittstellen und ein entsprechendes Protokoll, wie in der ITU-Normenserie X.7xx (Genf, CCITT) festgelegt.

Bedienungssysteme, auch Operating Systems (=OS) genannt, sind über Q3-Schnittstellen ebenso mit dem Management Network verbunden, wie Netzelemente, hier im besonderen Vermittlungsstellen. Die Bedienungssysteme weisen meist Work Stations auf, an welchen ein Operator unter Zuhilfenahme eines Bedienerterminals die erforderlichen Eingaben und Abfragen durchführen, d. h. mit einem Koordinationsprozessor mit einer Q3-Plattform in dem Netzelement Verbindung aufnehmen kann.

In dem Koordinationsprozessor eines Netzelementes, hier in seiner Q3-Plattform, dient als zentraler Baustein eine Funktion, z. B. die Log Control Function, definiert in der CCITT-Recommendation X.735 (ITU 1993), zum Zwischenspeichern von Netzelementdaten, wie z. B. von Gebührendaten, Statistikdaten etc. Diese Daten, die oft sehr umfangreich sind, sollen dann zu den Bedienungssystemen transferiert werden, um dann dort, z. B. für die Gebührenberechnung, verwendet zu werden. Bei dem verwendeten Verfahren für den Datenzugriff wird über die Q3-Schnittstelle seitens eines Bedienungssystems eine Aufforderung, im Q3-Protokoll ein M-GET Request, zu dem Netzelement geleitet, wo nun jeder einzelne Datensatz der Subobjekte eines Objekts mit einer eigenen Nachricht (M-GET-Response im Q3-Protokoll) abgesandt wird, und zwar mit einem entsprechenden Overhead im Q3-Protokoll. Da die in der Log Control Function gespeicherten Daten, wie bereits erwähnt, sehr umfangreich sein können, z. B. mehrere 100 MByte, verläuft der Datenverkehr auf die beschriebene Art sehr zeitintensiv.

Eine Aufgabe der Erfindung liegt darin, das Zugreifen bzw. Versenden der Daten ökonomischer und rascher zu gestalten.

Diese Aufgabe wird mit einem Verfahren der eingangs genannten Art gelöst, bei welchem erfindungsgemäß bei Einlangen einer Zugriffsanforderung für ein Objekt seitens eines Bedienungssystems die Daten einer vorgegebenen Teilmenge von Subobjekten in ein File geschrieben und sodann zusammengefaßt an das Bedienungssystem gesandt werden.

Dank der Erfindung können die Daten der Subobjekte wesentlich rascher abgesandt werden, insbesondere wenn viele Subobjekte mit je verhältnismäßig wenigen Nutzdaten vorliegen, da letztlich für die Daten sämtlicher erfaßter Subobjekte de facto nur der verhältnismäßig geringe Overhead für das Protokoll für den Filetransfer und keinerlei Q3-Protokoll-Overhead anfällt.

Das Verfahren nach der Erfindung gestaltet sich besonders flexibel, wenn die Teilmenge von Subobjekten in der Zugriffsanforderung angegeben wird.

Andererseits ist es oft ausreichend und einfacher, wenn bei Einlangen einer Zugriffsanforderung sämtliche Subobjekte eines Objektes in ein File geschrieben werden.

Die Erfindung ist mit besonderem Vorteil anwendbar, wenn die Netzverwaltung über ein Q3-Protokoll abläuft. Dabei kann es für die Verwaltung vereinfachend sein, wenn die Zugriffsanforderung im Rahmen des Q3 Protokolls über einen M-ACTION Befehl, der Transfer der zusammengefaßten Daten jedoch über ein FTP-Protokoll erfolgt.

Möglich und in vielen Fällen vereinfachend ist es aber auch, wenn die Zugriffsanforderung und die Übersendung der zusammengefaßten Daten in dem Protokoll 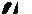 FTP" abläuft.

Um eine möglichst hohe Reduktion an zu übertragenden Daten zu erreichen, empfiehlt es sich, wenn lediglich die Nutzdaten der Subobjekte in ein File geschrieben werden.

Die Erfindung samt weiterer Vorteile ist im folgenden unter Zuhilfenahme der Zeichnung lediglich beispielhaft beschrieben. In der Zeichnung zeigen
Fig. 1 schematisch eine Netzkonfiguation mit Netzelementen und Q3-Schnittstellen,
Fig. 2 schematisch den Ablauf bei dem Zugriff und dem Senden von Daten bei einer ersten Variante der Erfindung und
Fig. 3 einen schematischen Ablauf ähnlich wie in Fig. 2 bei einer zweiten Variante der Erfindung.

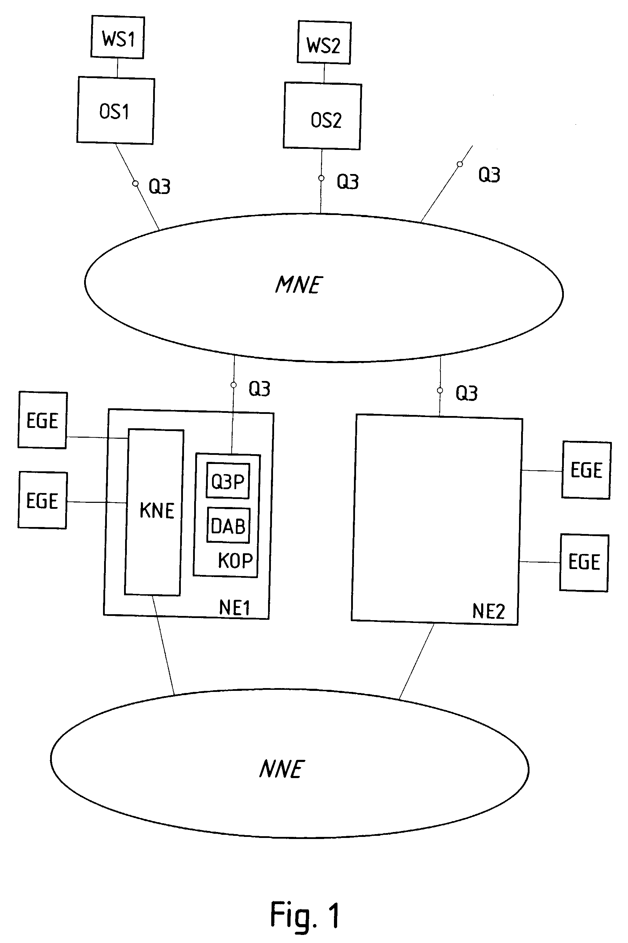

Gemäß Fig. 1 weist ein Telekommunikationsnetz ein eigentliches Nachrichtennetz NNE, z. B. ein ISDN-Festnetz, mit Netzelementen NE1, NE2 in diesem Beispiel ATM-Vermittlungsstellen auf, an welche Endgeräte EGE angeschlossen sind. Für Betrieb und Wartung ist weiters ein Managementnetz MNE eingerichtet, an welches über Q3-Schnittstellen Q3 einerseits die Netzelemente NE1, NE2 und andererseits Bedienungssysteme OS1, OS2 mit Workstations WS1, WS2 angeschlossen sind. Ein Netzelement, hier das Element NE1 weist neben einem Koppelnetz KNE auch einen Koordinationsprozessor KOP mit einer Q3-Plattform Q3P und einer Datenbank DAB auf. Aufbau und Funktion eines Managementnetzes für ISDN sind beispielsweise in 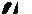 ISDN - Digitale Netze für Sprach-, Text-, Daten-, Video- und Multimediakommunikation", Peter Bocker, ISBN 3-540-57431-x in Kapitel 8.3 beschrieben.

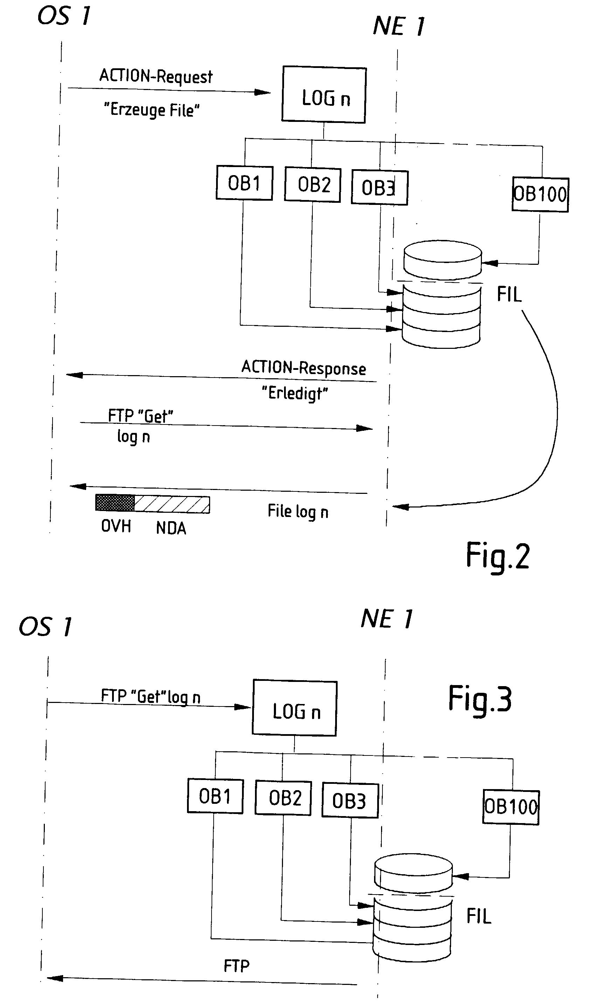

Eine Aufgabe der Bedienungssysteme OS1, OS2 liegt z. B. darin, in der Datenbank DAB gespeicherte Gebührendaten abzufragen bzw. weiterzuleiten etc. Unter Bezugnahme auf Fig. 2 sei angenommen, daß die Gebührendaten in einem Objekt LOG n vorlägen, das Subobjekte OB1 ... OB100 aufweist, welche die Gebührendaten einzelner Teilnehmergruppen enthalten. Allgemein liegen die Daten, welche z. B. auch andere Teilnehmer- oder Anschluß-spezifische Daten sein können, als Objektmodelle mit Baumstruktur vor, die oft komplex verzweigt sind. Außer dem hier nur beispielsweise betrachteten Objekt 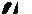 Log Control Function" sind noch andere Objekte üblich, wie z. B. die 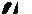 Event Report Function" oder das Objekt 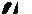 Hardware-Configuration".

Gemäß Fig. 2 wird, z. B. von dem Bedienungssystem OS 1, über das objektorientierte Q3-Protokoll eine Zugriffsanforderung ACTION-Request 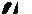 Erzeuge File" an das Netzelement NE1 gesandt. Dazu ist anzumerken, daß das Q3-Protokoll prinzipiell fünf 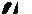 Request"-Typen kennt, nämlich 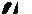 CREATE", 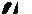 DELETE", 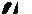 SET", 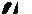 GET" und 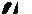 ACTION" (siehe die CCITT-Recommendation X.710), von welchem der Request 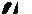 ACTION" nur teilnormiert, darüber hinaus jedoch frei definierbar ist. Somit wird hier der Request 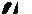 ACTION" als Befehlt dazu verwendet, ein File FIL der Nutzdaten aller Subobjekte OB1, OB2 ... OB100 des Objekts LOG n anzulegen.

Nach Erledigung dieses Auftrages, d. h. nachdem die Nutzdaten, hier die Gebührendaten von z. B. der letzten drei Tage, in dem File FIL zusammengefaßt wurden, erfolgt eine Rückmeldung ACTION-response 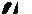 erledigt" an das Bedienungssystem OS1. Daraufhin oder zu einem späteren Zeitpunkt kann das Bedienungsystem OS1 über einen Befehl in dem Standardprotokoll 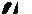 FTP" (File Transfer Protocol, spezifiziert in RFC 959), in Fig. 2 der Befehlt FTP 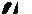 Get"logn das gesamt File FIL von dem Netzelement NE1 abziehen. Dieses File enthält sämtliche gewünschten Datensätze als Nutzdaten NDA und die Übertragung gestaltet sich wesentlich effizienter als nach dem Stand der Technik. Bisher wurde jeder Datensatz, mit einem Q3-Protokoll Overhead versehen, abgesandt, nach der Erfindung ist nun für alle Datensätze lediglich der FTP Protokoll Overhead OVH erforderlich. Natürlich kann es notwendig sein, in Abhängigkeit von der Größe des Files und der vorhandenen Leitungskapazität ein File zu unterteilen, doch ergibt sich jedenfalls eine Einsparung an zu übertragenden Daten, die besonders dann sehr groß wird, wenn die einzelnen Datensätze verhältnismäßig klein sind, sodaß die Summe der für sie im üblichen Q3-Protokoll vorgesehenen Overheads in einem Mißverhältnis zu Summe der Nutzdaten steht.

In Fig. 3 ist als Variante dargestellt, daß seitens eines Bedienungssystems OS1 in dem Standard FTP-Protokoll eine Zugriffsanforderung FTP 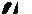 get"log n an das Netzelement NE1 gesandt wird, wobei dieser Befehl ein Zusammenfassen sämtlicher Subobjekt-Daten bzw. Nutzdaten des Objektes LOG n in ein File FIL und das darauffolgende Absenden des gesamten Files FIL, wiederum im FTP-Protokoll an die Bedienerstation OS1 bewirkt. In diesem Fall wären - zumindest für jene Netzelemente, die für die Bearbeitung von Daten aus der Log Control Function vorgesehen sind, keine Q3-Schnittstellen erforderlich.

Es ist ersichtlich, daß im Rahmen der Erfindung Variationen möglich sind, doch bleibt immer das Zusammenfassen mehrerer Subobjekte zu einem File und das Versenden dieses Files ein wesentliches Merkmal.

## Patentansprüche

1. Verfahren zur Durchführung von Zugriffen auf Daten, welche in Netzelementen (NE1, NE2)) eines Kommunikationsnetzes in objektorientierter Form als Objektmodelle mit einer Baumstruktur vorliegen, und in dem Netz der Datenverkehr betreffend die Netzverwaltung zumindest zum Teil über ein objektorientiertes Protokoll abläuft,
**dadurch gekennzeichnet**,
daß bei Einlangen einer Zugriffsanforderung für ein Objekt (LOGn) seitens eines Bedienungssystems (OS1, OS2) die Daten einer vorgegebenen Teilmenge von Subobjekten (OB 1 ... OB 100) in ein File (FIL) geschrieben und sodann zusammengefaßt an das Bedienungssystem (OS1, OS2) gesandt werden.

2. Verfahren nach Anspruch 1,
**dadurch gekennzeichnet**, daß die Teilmenge von Subobjekten (OB 1 . . . OB 100) in der Zugriffsanforderung angegeben wird.

3. Verfahren nach Anspruch 1,
**dadurch gekennzeichnet**, daß bei Einlangen einer Zugriffsanforderung sämtliche Subobjekte (OB 1 . . . OB 100) eines Objektes (LOG) in ein File geschrieben werden.

4. Verfahren nach einem der Ansprüche 1 bis 3,
**dadurch gekennzeichnet**, daß die Netzverwaltung über ein Q3-Protokoll abläuft.

5. Verfahren nach Anspruch 4,
**dadurch gekennzeichnet**, daß die Zugriffsanforderung im Rahmen des Q3 Protokolls über einen M-ACTION Befehl, der Transfer der zusammengefaßten Daten jedoch über ein FTP-Protokoll erfolgt.

6. Verfahren nach einem der Ansprüche 1 bis 4,
**dadurch gekennzeichnet**, daß die Zugriffsanforderung und die Übersendung der zusammengefaßten Daten in dem Protokoll 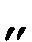 FTP" abläuft.

7. Verfahren nach einem der Ansprüche 1 bis 6,
**dadurch gekennzeichnet**, daß lediglich die Nutzdaten der Subobjekte (OB1 ... OB100) in ein File geschrieben werden.
